**Europäisches Patentamt**

**European Patent Office**

**Office européen des brevets**

(19)

(11) Veröffentlichungsnummer : **0 355 442 B1**

# (12) EUROPÄISCHE PATENTSCHRIFT

(45) Veröffentlichungstag der Patentschrift :
**09.12.92 Patentblatt 92/50**

(51) Int. Cl.$^5$ : **B41F 13/00**

(21) Anmeldenummer : **89113719.2**

(22) Anmeldetag : **25.07.89**

(54) **Verfahren und Einrichtung zur Reduzierung der Drehmomentbeanspruchung auf ein mittels eines Elektromotors angetriebenen Systems.**

(30) Priorität : **24.08.88 DE 3828638**

(43) Veröffentlichungstag der Anmeldung :
**28.02.90 Patentblatt 90/09**

(45) Bekanntmachung des Hinweises auf die
Patenterteilung :
**09.12.92 Patentblatt 92/50**

(84) Benannte Vertragsstaaten :
**FR GB IT SE**

(56) Entgegenhaltungen :
**DE-A- 2 828 556**

(73) Patentinhaber : **Heidelberger Druckmaschinen
Aktiengesellschaft
Kurfürsten-Anlage 52-60 Postfach 10 29 40
W-6900 Heidelberg 1 (DE)**

(72) Erfinder : **Rodi, Anton
Karlsruher-Strasse 12
W-6906 Leimen 3 (DE)**

(74) Vertreter : **Stoltenberg, Baldo Heinz-Herbert et
al
c/o Heidelberger Druckmaschinen AG
Kurfürsten-Anlage 52-60
W-6900 Heidelberg 1 (DE)**

EP 0 355 442 B1

Jouve, 18, rue Saint-Denis, 75001 PARIS

**Beschreibung**

Die Erfindung betrifft ein Verfahren zur Reduzierung der Drehmomentbeanspruchung auf ein mittels eines Elektromotors angetriebenen Systems gemäß dem Oberbegriff des Hauptanspruchs. Ferner betrifft die Erfindung eine Einrichtung zur Durchführung des Verfahrens.

Es ist aus der DE-OS 35 40 645 ein Verfahren bekannt, dem die Aufgabe zugrundeliegt, eine Vorrichtung zu schaffen, mit der Torsionsschwingungen in einem Mehrmassetorsionsschwinger mit einem aktiven System gedämpft werden können. Solche Torsionsschwingungen treten bevorzugt dort auf, wo Drehmomentschwankungen aufgrund unterschiedlicher Lastmomente erzeugt werden. Diese Drehmomentschwankungen können Schwingungen anregen, welche in einem System, bei dem mehrere und unterschiedliche Massen bewegt werden, zu sehr hohen dynamischen Beanspruchungen der Bauteile führen.

Insbesondere Druckmaschinen weisen eine Vielzahl von Einrichtungen auf, die unterschiedliche Lastmomente erzeugen. So erzeugen beispielsweise Greifersteuerungen über Kurvenscheiben, Bogenzuführeinrichtungen und Bogenübergabeeinrichtungen, aber auch die Druckkräfte selbst, zyklisch wiederkehrende Lastmomente, die alle auf einen zentralen Antrieb wirken. Dies führt in den Kraftübertragungsmitteln, beispielsweise in dem Rädergetriebezug, welcher neben dem Antrieb auch für die Winkelzuordnung der Druckwerke untereinander sorgt, zu elastischen Verformungen, die ebenfalls periodisch entsprechend den Lastmomentschwankungen auftreten. Die Winkelzuordnung bzw. Synchronisierung der einzelnen Druckwerke wird somit gestört, was sich im Druckbild als Registerfehler bemerkbar machen kann.

Gemäß dem bekannten Verfahren werden Torsionsschwingungen, die durch solche Lastmomentschwankungen erzeugt werden, durch entgegengesetzte Momente ausgeglichen. Solche entgegengesetzten Momente werden über ein Stellglied aufgebracht und greifen an einer bestimmten Stelle innerhalb des Antriebssystems an. Dieses Verfahren hat jedoch den Nachteil, daß die Gegenmomente an einer einzigen Stelle des Antriebs erzeugt werden und somit nicht dort den Lastmomenten entgegenwirken wo diese entstehen. Damit treten jedoch innerhalb des Antriebsstranges innere Spannungen auf, die nicht ausgeglichen werden können. Diese inneren Spannungen im Antrieb verringern nicht die Beanspruchung des Getriebes, sondern können diese unter Umständen noch erhöhen und zu größeren Verformungen des Getriebes führen.

Die Aufgabe der Erfindung liegt daher in der Schaffung eines Verfahrens, welches die Lastmomentschwankungen wirksam reduziert und die Beanspruchung des Antriebs wesentlich herabsetzt.

Diese Aufgabe wird ausgehend von dem gattungsgemäßen Verfahren durch das Kennzeichen des Anspruchs 1 und ausgehende von der gattungsgemäßen Einrichtung durch das Kennzeichen des Anspruchs 2 gelöst.

Bei einem System, welches Lastschwankungen unterworfen ist, und welches von einem Motor über einen Räderzug angetrieben wird, entstehen, wie schon erwähnt, an den Zahnflanken der einzelnen Zahnräder unterschiedliche periodisch wechselnde Kräfte. Diese Kräfte können sowohl zu Schwingungsanregungen führen, als auch zu einem unruhigen Lauf der Druckmaschine mit den damit verbundenen negativen Folgen.

Der Vorteil der Erfindung liegt nun darin, daß die Kräfte zwischen den einzelnen Zähnen nahezu konstant gehalten werden. Dies bedeutet also, daß bei einer momentanen Erhöhung des Lastmoments, welches eine erhöhte Kraft zwischen den Zahnflanken bedeuten würde, eine Reduzierung des Antriebmomentes vorgenommen wird. Damit weicht das Antriebsmoment dem Lastmoment kurzfristig aus und zwar soweit, daß die Kraft zwischen den Zahnflanken konstant bleibt. Reduziert sich das Lastmoment, dann wird das Antriebsmoment erhöht, so daß auch in diesem Fall keine Lastschwankung an dem Räderzug auftreten kann.

Die Erfindung wendet sich von der bisher üblichen Antriebsregelung ab, die normalerweise bei einer Erhöhung des Lastmomentes auch eine Erhöhung des Antriebsmomentes forderte, um die Antriebsdrehzahl auf einem konstanten Wert zu halten. Die erfindungsgemäße Maßnahme steht jedoch nicht im Widerspruch zu der Forderung nach der Einhaltung einer vorgegebenen Drehzahl. Da eine Lastmomentschwankung immer nur kurzfristig auftritt und sich periodisch wiederholt und damit nach einer Erhöhung des Lastmoments auch wieder eine Absenkung des Lastmoments erfolgt, bleibt die mittlere Drehzahl, die über einen längeren Zeitraum gemessen wird, konstant. Die Erfindung hat somit den Vorteil, daß das Lastmoment welches an dem Antrieb des Systems angreift, auf einem konstanten Wert gehalten wird. Damit können Torsionsschwingungen und wechselnd wirkende elastische Verformungen erst gar nicht auftreten. Es erübrigt sich daher die Kompensation solcher Schwingungen.

Eine Ausgestaltung der Erfindung sieht vor, den Lastmomentverlauf in Abhängigkeit von der Drehwinkelstellung des Systems zu erfassen und in einer Speichereinrichtung abzuspeichern. Anhand dieses Lastmomentverlaufs erfolgt dann die Regelung des Antriebsmotors. Die Abspeicherung erfolgt entweder bei der Nenndrehzahl oder - falls drehzahlabhängige Lastmomente aufgrund von schwingenden Systemen auftreteninnerhalb bestimmter Drehzahlbereiche.

Die Drehwinkelstellung des Systems wird zweckmäßigerweise durch einen Winkelgeber erfaßt, dieser Winkelgeber kann auch als Inkrementalsensor ausgebildet sein.

Es hat sich als vorteilhaft erwiesen, bei großen Trägheitsmomenten des Antriebs oder des gesamten Systems bei einer Erhöhung des Lastmoments nicht nur die Drehzahl zu verringern, sondern auch eine aktive Bremsung durch den Motor vorzunehmen. Diese Bremsung ist dann notwendig, wenn eine reine Drehzahlverringerung nicht mehr ausreicht, um dem Lastmoment entgegenzuwirken und das Lastmoment konstant zu halten. Insbesondere bei Druckmaschinen weist der Rotor des Antriebsmotors ein sehr hohes Trägheitsmoment auf, welches einer rechtzeitigen Rücknahme des Antriebsmoments entgegenwirkt. Deshalb kann ein Abbremsen des Motors zweckmäßig sein. Ein Abbremsen des Motors wirkt sich aber im wesentlichen nur auf den Motor aus, da das dem Motor nachgeordnete Antriebssystem aufgrund der hier vorhandenen geringeren Trägheitsmomente der Verzögerung folgt, ohne daß das Bremsmoment auf diesen Antriebsbereich übergreift. Dies bedeutet also, daß ein Lastwechsel bzw. eine Lastrichtungsumkehr in einem Zahnradantrieb dieses Antriebsbereiches nicht erfolgt.

Der Motor kann auch so stark und rechtzeitig bremsen, daß das Trägheitsmoment des nachgeordneten Antriebssystems nicht zur Erhöhung des Lastmoments beiträgt.

Zur Regelung der mittleren Drehzahl ist in vorteilhafter Weise ein Inkrementalgeber vorgesehen, der die Drehzahl des Systems erfaßt, diese Drehzahl einem Tiefpaß zuführt, wobei dieser Tiefpaß einen Mittelwert bildet. Der Mittelwert wird mit einer Drehzahl-Sollvorgabe verglichen und einer Drehzahleinrichtung eine Abweichung zwischen Mittelwert und Drehzahl-Sollvorgabe als Eingangsgröße aufgeschaltet. Die Drehzahlabweichung führt dann zu einer Änderung der Drehzahl, so daß der Mittelwert der Ist-Drehzahl der Drehzahl-Sollvorgabe angepaßt wird.

Weitere vorteilhafte Ausgestaltungen der Erfindung sind in den Unteransprüchen und der nachfolgenden Beschreibung enthalten.

Es zeigt:

Fig. 1 den schematischen Aufbau einer Druckmaschine,

Fig. 2 ein Blockschaltbild einer Antriebsmomentregelung und

Fig. 3a-c Diagramme zur Darstellung des Zusammenhangs zwischen Antriebs- bzw. Lastmomenten und Drehzahl.

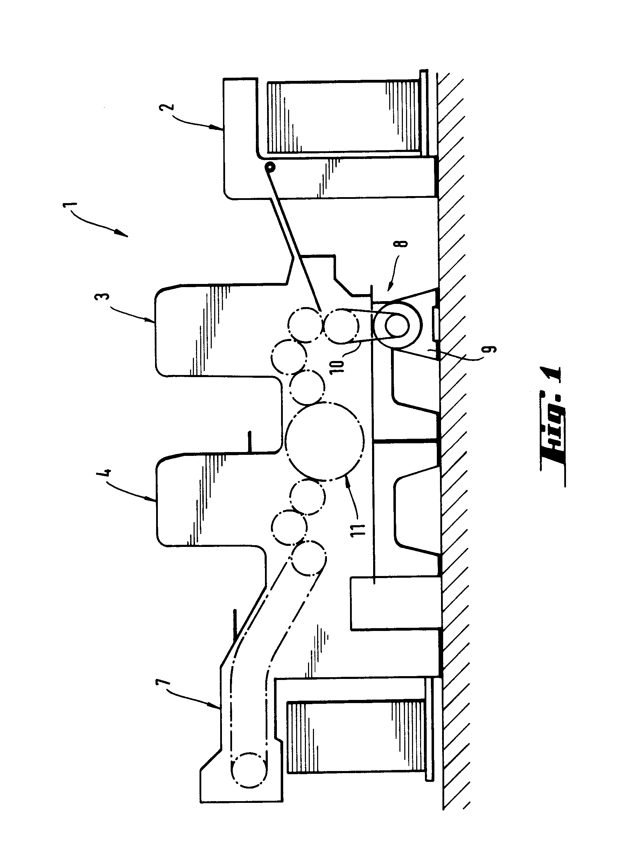

Die schematische Darstellung einer Druckmaschine 1 gemäß Fig. 1 zeigt eine Bogenoffsetdruckmaschine mit einem Bogenanleger 2, zwei Druckwerken 3, 4, und einem Bogenausleger 7. Selbstverständlich kann die Druckmaschine nur ein Druckwerk oder auch mehrere Druckwerke aufweisen. Der Antrieb der gesamten Druckmaschine erfolgt über einen Elektromotor 9, wobei das Antriebsmoment über einen Riemenantrieb 10 auf einen Antriebsräderzug 11 an die jeweils anzutreibenden Elemente verteilt wird. Eine Druckmaschine weist aufgrund einer Vielzahl von kurvengesteuerten Bewegungselementen wie z. B. Greifer, Bogenanleger und Reiberwalzen, zyklisch schwankende Lastmomente auf. Diese Lastmomente greifen an unterschiedlichen Stellen im Antriebsräderzug an und können elastische Verformungen der angetriebenen Teile bewirken. Diese elastischen Verformungen bewirken einerseits eine Schwingungsanregung des gesamten Systems und andererseits geringfügige Abweichungen zwischen den Winkelstellungen der einzelnen Druckwerke, so daß unter Umständen Passerfehler auftreten können.

Üblicherweise wird die Drehzahl des Motors anhand einer vorgegebenen Druckgeschwindigkeit eingestellt und über eine Regeleinrichtung konstant gehalten. Die Regelung des Motors auf eine konstante Drehzahl führt jedoch dazu, daß bei einer Erhöhung des Lastmoments auch das Antriebsmoment erhöht wird und damit die auf den Antriebsräderzug wirkenden Kräfte ebenfalls zunehmen. Gleichfalls bewirkt eine Verringerung des Lastmoment eine Verringerung des Antriebsmoments, wodurch die Kräfte im Antriebsräderzug abnehmen. Diese zyklischen Schwankungen des Lastmoments, die sowohl einen höheren Verschleiß der angetriebenen Teile als auch eine größere Ungenauigkeit des Druckes in Form eines Passerfehlers bewirken, werden dadurch weitgehend reduziert, daß nicht eine Regelung des Antriebsmotors auf eine konstante Drehzahl, sondern eine Regelung des Antriebsmotors zur Erzielung eines konstanten Lastmoments vorgenommen wird.

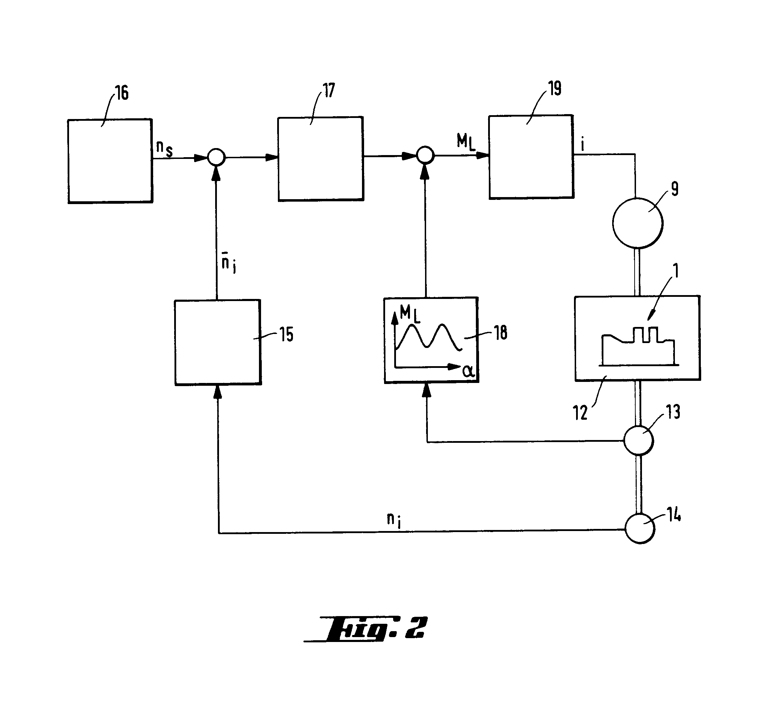

In Fig. 2 ist ein Blockschaltbild einer solchen Regelung gezeigt. Kernstück dieses Blockschaltbilds ist der Antriebsmotor 9 zum Antrieb der Druckmaschine 1, die in Block 12 schematisch dargestellt ist. An der Druckmaschine ist ein Winkelgeber 13 und ein Drehzahlgeber 14 angeordnet. Beide erfassen die Drehzahl bzw. die Druckgeschwindigkeit. Selbstverständlich besteht auch die Möglichkeit, einen einzigen Drehzahlsensor anzuordnen, aus dessen Signalform der Drehwinkel sowie die Drehzahl ableitbar ist, wie beispielsweise aus einem Inkrementalgeber.

Das Signal des Drehzahlgebers 14 wird einem Tiefpaß 15 zugeführt, der aus diesem Signal $n_i$ den Mittelwert bildet. Der Mittelwert $\overline{n}_i$ wird einem Drehzahl-Sollwert $n_s$, welcher von einer Druckgeschwindigkeitsvorgabe 16 gebildet wird, überlagert. Das überlagerte Signal, d. h. das Differenzsignal, führt zu einem Drehzahlregler 17, der bei einer Abweichung zwischen dem Mittelwert des Drehzahl-Istwertes und dem Drehzahl-Sollwert ein Ausgangssignal über den Momentenregler 19 erzeugt, welches die Drehzahl des Antriebsmotors 9 entsprechend beeinflußt. Damit wird der Mittelwert der Drehzahl unabhängig von Schwankungen des Antriebsmomentes konstant gehalten.

Das von dem Winkelgeber 13 gebildete Winkelstellungssignal der Druckmaschine wird einer Speichereinrichtung 18 zugeführt. In dieser Speichereinrichtung ist die Verteilung des Lastmoments der Druckmaschine in Bezug zu der Winkelstellung des Antriebs abgespeichert. Zweckmäßigerweise ist das Lastmoment von 0 Grad bis 360 Grad Winkelstellung abgespeichert, wobei dieser Winkelbereich dem Durchlauf eines Druckbogens durch ein Druckwerk entspricht. Die Abspeicherung des Lastmoments kann beispielsweise in einem Probelauf erfolgen, es besteht ferner die Möglichkeit die Abspeicherung innerhalb bestimmter Drehzahlbereiche vorzunehmen. Dies ist insbesondere dann zweckmäßig, wenn die Druckmaschine mit unterschiedlichen Drehzahlen betrieben wird und bei diesen unterschiedlichen Drehzahlen die Lastmomente aufgrund von beschleunigten Massen variieren.

Das abzuspeichernde Lastmoment kann aber auch nach jeder Inbetriebnahme der Druckmaschine über Lastmomentaufnehmer neu gebildet und abgespeichert werden. Auf diese Weise läßt sich das abzuspeichernde Lastmoment auf die unterschiedlichen Betriebsarten der Druckmaschine, wie Schön- und Widerdruck, Drucken einer bestimmten Anzahl von Farben, und Drucken unterschiedlicher Papierdicken, anpassen.

Synchron zu der Winkelstellung der Druckmaschine, welche durch den Winkelgeber 13 erfaßt wird, erfolgt die Ausgabe des abgespeicherten Lastmomentes durch die Speichereinrichtung 18. Dieses ausgegebene Lastmoment wird dem Ausgangssignal des Drehzahlreglers 17 aufgeschaltet und als Antriebsmomentvorgabe einem Momentenregler 19 zugeführt. Dieser Momentenregler 19 regelt das Antriebsmoment über den Motorstrom. Der Motorstrom, der als Ausgangssignal des Momentenreglers 19 den Antriebsmotor 9 steuert, beinhaltet somit, aufgrund seines Mittelwertes, ein Maß für die mittlere Drehzahl und, aufgrund seiner zyklischen Anpassung an das abgespeicherte Lastmoment, eine Variation des Antriebsmomentes. Auf den Motor wirken also zwei unabhängig voneinander arbeitende Regelkreise ein, wobei der innere Regelkreis das Antriebsmoment abhängig von dem Lastmoment variiert und der äußere Regelkreis die mittlere Drehzahl des Motors in Abhängigkeit von der Drehzahl-Sollwertvorgabe ausregelt.

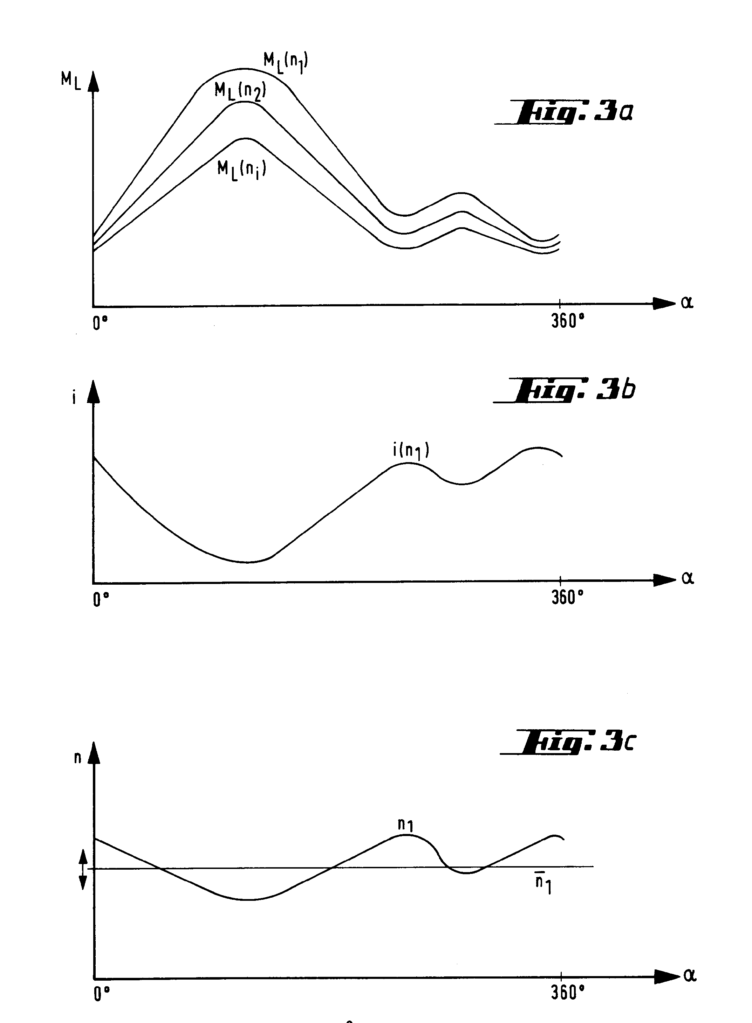

In den Diagrammen gemäß Fig. 3a und Fig. 3b sind die Zusammenhänge zwischen den unterschiedlichen Momenten und der Drehzahl gezeigt. Diagramm 3a zeigt die Lastmomentverteilung über einen Winkelstellungsbereich von 0 Grad bis 360 Grad. Diese Verteilung wiederholt sich zyklisch bei jeder Maschinenumdrehung. Die Lastmomentverteilung $M_L$ ist bei einer bestimmten Drehzahl ($n_1$) dargestellt. Dieses Diagramm zeigt auch, daß eine Abspeicherung des Lastmoments bei unterschiedlichen Drehzahlen erfolgen kann. Es ergeben sich dann den jeweiligen Drehzahlen zugeordnete Lastmomente $M_L$ ($n_i$), die

während des Betriebs der Druckmaschine je nach vorliegender Druckmaschinendrehzahl der Antriebsmomentenregelung aufgeschaltet werden. Das Diagramm 3b zeigt den Motorstrom i, der in Abhängigkeit von dem abgespeicherten Lastmoment durch den Momentenregler 19 erzeugt wird. Es ist ersichtlich, daß der Strom umgekehrt proportional zu dem abgespeicherten Lastmoment ist. Das Diagramm zeigt den Strom, der sich bei der Drehzahl $n_1$ einstellt. Aufgrund dieses Stromverlaufs und aufgrund des auf den Motor wirkenden Lastmoments wird sich die Drehzahl $n_1$ des Motors gemäß Diagramm 3c einstellen.

Durch die Drehzahlabhängigkeit des Lastmoments hat die Drehzahlreduzierung ein Absinken des Lastmoments zur Folge. Die Größe der Drehzahlveränderung ist dabei so gewählt, daß das von der Maschine gebildete Lastmoment näherungsweise konstant bleibt. Es erfolgt also eine Wechselbeziehung zwischen Motordrehzahl und Lastmoment derart, daß die Absenkung bzw. Anhebung der Drehzahl unmittelbar die Wirkung auf das Lastmoment entfaltet und zwar dahingehend, daß die Lastmomentschwankungen wirksam reduziert werden und sich ein mittleres Lastmoment einstellt, das näherungsweise konstant ist. Das Diagramm 3c zeigt weiterhin die mittlere Drehzahl $\bar{n}_1$. Diese mittlere Drehzahl entspricht der Soll-Drehzahlvorgabe und ist konstant.

Es wird ersichtlich, daß das beschriebene Verfahren zur Reduzierung der Drehmomentbeanspruchung, d. h. zur Konstanthaltung des Lastmoments keine Auswirkungen auf den Produktionsablauf hat. Die mittlere Druckgeschwindigkeit erfährt also keine Änderungen, sondern kann je nach Bedarf vorgegeben werden.

## BEZUGSZEICHENLISTE

| | |
|---|---|
| 1 | Druckmaschine |
| 2 | Bogenanleger |
| 3 | Druckwerk |
| 4 | Druckwerk |
| 5 | Druckwerk |
| 6 | Druckwerk |
| 7 | Bogenausleger |
| 8 | Zentralantrieb |
| 9 | Antriebsmotor |
| 10 | Riemenantrieb |
| 11 | Antriebsräderzug |
| 12 | Block (Druckmaschine) |
| 13 | Winkelgeber |
| 14 | Drehzahlgeber |
| 15 | Tiefpaß |
| 16 | Druckgeschwindigkeitsvorgabe |
| 17 | Drehzahlregler |
| 18 | Speichereinrichtung |
| 19 | Momentenregler |
| ML | Lastmomentverteilung |

$n_i$     Signal des Drehzahlgebers

$\bar{n}_i$     Mittelwet aus $n_i$

$n_s$     Drehzahlsollwert

i     Motorstrom

       Winkelstellungsbereich

**Patentansprüche**

1. Verfahren zur Reduzierung der Auswirkungen von Drehmomentschwankungen auf ein mittels eines Elektromotors angetriebenen Systems, insbesondere eine Druckmaschine, wobei das System zyklisch auftretende drehzahlabhängige Lastmomentschwankungen erzeugt,
**dadurch gekennzeichnet,**
daß Änderungen des Lastmoments durch entgegengerichtete Änderungen des Antriebsmoments entgegengewirkt werden, derart, daß das Lastmoment auf einem näherungsweise konstanten Wert gehalten wird.

2. Einrichtung zur Reduzierung der Auswirkungen von Drehmomentschwankungen auf ein mittels eines Elektromotors angetriebenen Systems, insbesondere eine Druckmaschine, wobei das System zyklisch auftretende drehzahlabhängige Lastmomentschwankungen erzeugt, mit einer Drehzahlregeleinrichtung, welche den Mittelwert der Drehzahl des Elektromotors auf einem annähernd konstanten vorgewählten Wert regelt,
**dadurch gekennzeichnet,**
daß eine Anordnung zur Erfassung des Lastmoments vorgesehen ist und eine Anordnung zur Regelung des Antriebsmoments, wobei die Regelung des Antriebsmoments derart erfolgt, daß bei einer Änderung des Lastmoments das Antriebsmoment entgegengerichtet verändert wird, derart, daß das Lastmoment auf einem näherungsweise konstanten Wert gehalten wird.

3. Einrichtung nach Anspruch 2,
**dadurch gekennzeichnet,**
daß eine Speichereinrichtung (18) vorgesehen ist, in welcher der Lastmomentverlauf in Abhängigkeit von der Drehwinkelstellung des Systems abgespeichert ist.

4. Einrichtung nach Anspruch 3,
**dadurch gekennzeichnet,**
daß ein Winkelgeber (13) vorgesehen ist, welcher die Drehwinkelstellung des Systems erfaßt.

5. Einrichtung nach einem der vorherigen Ansprüche,
**dadurch gekennzeichnet,**
daß die Anordnung zur Regelung des Antriebsmoments eine zyklische Abbremsung des Rotors vornimmt.

6. Einrichtung nach einem der vorherigen Ansprüche,
**dadurch gekennzeichnet,**
daß ein Drehzahlgeber (14) vorgesehen ist, welcher die Ist-Drehzahl des Systems erfaßt und weiterhin ein Tiefpaß (15) vorgesehen ist, welcher das von dem Drehzahlgeber (14) gebildete Signal zugeführt wird und welcher den Mittelwert der Drehzahl bildet und diesen Mittelwert dem Drehzahl-Sollwert überlagert, wobei eine Abweichung zwischen beiden Werten der Drehzahlregeleinrichtung zugeführt wird, zur Regelung der mittleren Drehzahl auf die Soll-Drehzahl.

**Claims**

1. Method of reducing the effects of torque fluctuations on a system, in particular a printing machine, driven by means of an electric motor, said system producing cyclically occurring load-torque fluctuations depending on the rotational speed,
characterized in
that changes in the load torque are counteracted by effecting oppositely directed changes in the drive torque so as to maintain the load torque at an approximately constant value.

2. Device for reducing the effects of torque fluctuations on a system, in particular a printing machine, driven by means of an electric motor, said system producing cyclically occurring load-torque fluctuations depending on the rotational speed, comprising a rotational-speed-regulating device regulating the mean value of the rotational speed of the electric motor to an approximately pre-determined value,
characterized in
that there are provided an arrangement for detecting the load torque and an arrangement for regulating the drive torque, the drive torque being regulated such that, given a change in the load torque, the drive torque is changed in opposite direction so that the load torque is maintained at an approximately constant value.

3. Device according to Claim 2,
characterized in
that there is provided a memory device (18) for storing changes in the load torque as a function of a rotaional-angle position of the system.

4. Device according to Claim 3,
characterized in
that there is provided an angle transmitter (13) for detecting the rotational-angle position of the system.

5. Device according to anyone of the preceding claims,
characterized in
that the arrangement for regulating the drive torque includes a device for cyclically braking the rotor.

6. Device according to anyone of the preceding claims,
characterized in
that there are provided a rotational-speed sensor (14) detecting the actual rotational speed of the system value and furthermore a low-pass filter (15) to which the signal formed by said rotational-speed sensor (14) is fed, which forms the mean value of the rotational speed and superimposes said mean value on the nominal rotational-speed value, a deviation between said two values being fed to the rotational-speed-regulating device for regulating the mean rotational speed to the nominal rotational speed.

## Revendications

1. Procédé destiné à réduire les répercussions des fluctuations du couple de rotation sur un système entraîné au moyen d'un moteur électrique, en particulier une machine à imprimer, ce système générant des fluctuations cycliques du couple résistant, en fonction de la vitesse de rotation, caractérisé en ce qu'on s'oppose à des variations du couple résistant par des variations en sens opposé du couple moteur, en maintenant le couple résistant à une valeur approximativement constante.

2. Dispositif destiné à réduire les répercussions des fluctuations du couple de rotation sur un système entraîné au moyen d'un moteur électrique, en particulier une machine à imprimer, ce système générant des variations cycliques du couple résistant, en fonction de la vitesse de rotation, avec un dispositif de réglage de la vitesse de rotation qui règle la valeur moyenne de la vitesse de rotation du moteur électrique sur une valeur présélectionnée à peu près constante, caractérisé en ce qu'il est prévu un dispositif destiné à enregistrer le couple résistant et un dispositif destiné à réguler le couple moteur, la régulation du couple moteur s'effectuant de telle sorte que dans le cas d'une variation du couple résistant le couple moteur est modifié en sens opposé, de manière que le couple résistant soit maintenu à une valeur approximativement constante.

3. Dispositif selon la revendication 2, caractérisé en ce qu'il est prévu un dispositif à mémoire (18) dans lequel est mémorisée la variation du couple résistant en fonction de l'angle de rotation du système.

4. Dispositif selon la revendication 3, caractérisé en ce qu'il est prévu un capteur angulaire (13) qui enregistre l'angle de rotation du système.

5. Dispositif selon l'une des revendications précédentes, caractérisé en ce que le dispositif destiné à réguler le couple moteur procède à un freinage cyclique du rotor.

6. Dispositif selon l'une des revendications précédentes, caractérisé en ce qu'il est prévu un capteur de vitesse de rotation (14) qui enregistre la vitesse de rotation réelle du système et en ce qu'il est prévu en outre un passe-bas (15) qui achemine le signal formé par le capteur de vitesse de rotation (14) et qui forme la valeur moyenne de la vitesse de rotation et superpose cette valeur moyenne à la valeur de consigne de la vitesse de rotation, un écart entre ces deux valeurs étant envoyé au dispositif de réglage de la vitesse de rotation afin de régler la vitesse de rotation moyenne sur la vitesse de rotation de consigne.

Fig. 1

Fig. 2

$M_L$

$M_L(n_1)$

$M_L(n_2)$

$M_L(n_i)$

**Fig. 3a**

0°　　　　　　　　　　　360°　　α

$i$

$i(n_1)$

**Fig. 3b**

0°　　　　　　　　　　　360°　　α

$n$

$n_1$

$\bar{n}_1$

**Fig. 3c**

0°　　　　　　　　　　　360°　　α